# EUROPEAN PATENT SPECIFICATION

(11) **EP 4 593 155 B1**
(45) Date of publication and mention of the grant of the patent: **25.02.2026**
(21) Application number: 24153402.3
(22) Date of filing: 23.01.2024
(51) Int. Cl.: H01M 10/613, H01M 10/625, H01M 10/659

(54) **BATTERY SYSTEM WITH IMPROVED COOLING CIRCUIT**
BATTERIESYSTEM MIT VERBESSERTEM KÜHLKREISLAUF
SYSTÈME DE BATTERIE AVEC CIRCUIT DE REFROIDISSEMENT AMÉLIORÉ

(43) Date of publication of application: 30.07.2025
(73) Proprietor: Samsung SDI Co., Ltd., Yongin-si, Gyeonggi-do 17084 (KR)
(72) Inventor: Ipek, Eymen, 8020 Graz (AT)
(74) Representative: Gulde & Partner

(56) References cited:
- CA-A1- 3 226 851
- CN-A- 110 165 332
- CN-U- 209 804 852
- US-A1- 2009 004 556
- US-A1- 2021 057 793
- US-A1- 2022 158 273

## Description

### Field of the Disclosure

The present disclosure relates to a battery system which, due to an improved cooling circuit, more securely handles a thermal runaway of one or more of its battery cells. Further, the present invention relates to a vehicle comprising such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle, BEV) or may include a combination of an electric motor and, for example, a conventional combustion engine (Plugin Hybrid Electric Vehicle, PHEV). BEVs and PHEVs use high-capacity rechargeable batteries, which are designed to give power for propulsion over sustained periods of time.

A single battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module may be formed by interconnecting the electrode terminals of the plurality of battery cells in an arrangement or configuration depending on a desired amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems often generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

To provide thermal control of the battery pack a thermal management system is required to safely use the at least one battery module by efficiently emitting, discharging and/or dissipating heat generated from its rechargeable batteries. If the heat emission, discharge, and/or dissipation is not sufficiently performed, temperature deviations may occur between respective battery cells, which may cause that the battery module may no longer generate a desired (or designed) amount of power. In addition, an increase of the internal temperature can lead to abnormal reactions occurring therein, and thus, charging and discharging performance of the rechargeable deteriorates and the life-span of the rechargeable battery is shortened. Thus, cell cooling for effectively emitting, discharging, and/or dissipating heat from the cells is important.

Exothermic decomposition of cell components may lead to a so-called thermal runaway. Generally, thermal runaway refers to a process that is accelerated by increased temperature, in turn releasing energy that further increases temperature. Thermal runaway occurs in situations where an increase in temperature changes cell the conditions in a way that causes a further increase in temperature, often leading to a destructive result. In rechargeable battery systems, thermal runaway is associated with strongly exothermic reactions that are accelerated by temperature rise. In thermal runaway, the battery cell temperature rises incredibly fast and the energy stored is released very suddenly. In extreme cases, thermal runaway can cause battery cells to explode and start a fire. In minor cases, it can cause battery cells to be damaged beyond repair.

When a battery cell is heated above a critical temperature (typically above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery or poor battery maintenance. For example, overcharging or rapid charging may lead to thermal runaway.

During thermal runaway, the failed battery cell may reach a temperature exceeding about 700°C. Further, large quantities of hot gas are ejected from inside of the failed battery cell through a venting opening of a cell housing into the battery pack. The main components of the vented gas are H₂, CO₂, CO, electrolyte vapor and other hydrocarbons. The vented gas is, therefore, flammable and potentially toxic. The vented gas also causes a gas-pressure increase inside the battery pack. In the worst case, the high temperatures lead to the process spreading to neighboring battery cells and fire in the battery pack. At this stage, the fire is hardly to extinguish.

It is therefore important to ensure an efficient cell cooling. For such cell cooling, a battery system may include a cooling circuit with cooling channels that extend along a side of the battery cells, usually along a bottom side of the battery cells. The battery cells may transfer heat to cooling fluid flowing along the cooling channels, thereby cooling the battery cells. During a thermal runaway the inside of an affected battery cell may reach excessive temperatures of up to 1000°C which may in turn lead to significant heating of the cooling fluid. As a result, the cooling fluid may reach temperatures that are so high that the cooling fluid heats up battery cells arranged downstream of the affected battery cell. This kind of convective thermal propagation may, in the worst case, lead to one or more of the downstream battery cells experiencing a thermal runaway as well. Such thermal propagation is often overlooked in known battery systems.

US 2022/158273 A1 pertains to thermal management systems for heat-generating devices, such as portable electronics and battery systems. It features a multilayer phase change material composite structure, which may include layers of PCM material, fire retardant material, and other thermal interface materials to control and dissipate heat, potentially preventing thermal runaway events. The system may also include a housing with interior structures that isolate batteries and incorporate flame-retardant materials with water to manage temperatures.

US 2021/057793 A1 relates to an emulsion comprising an aqueous carrier fluid; and a dispersion of micelles within the aqueous carrier fluid, wherein each micelle comprises a solid hydrophobic core particle comprising a phase change material and one or more emulsifiers forming a micellar shell around the solid hydrophobic core particle, wherein the micelles have a mean particle size diameter in the range of about 0.1 µm to about 1.5 µm.

CA 3 226 851 A1 pertains to a battery module for an electrically-driven aircraft that is designed to house multiple battery cells and prevent fires or explosions from affecting neighboring cells. It includes a housing with spaced-apart cell tubes, each containing battery cells, and a heat-absorbing member placed between the tubes. The heat-absorbing material undergoes a phase transition when a cell tube exceeds a predetermined temperature due to fire or explosion.

CN 209 804 852 U pertains to a battery pack heat dissipation device with a centralized heat dissipation function, including a base with a heat dissipation box and battery packs. The heat dissipation box, filled with composite phase change material, faces each battery pack formed by vertically stacked single batteries, with heat conducting sheets between adjacent batteries.

CN 110 165 332 pertains to a battery pack heat dissipation device with centralized heat dissipation, comprising a base, a heat dissipation box, and multiple battery packs arranged on the base. Each battery pack, formed by vertically stacked single batteries, faces the heat dissipation box filled with composite phase change material and is connected to it via heat conducting sheets.

US 2009/004556 A1 concerns an electrochemical cell battery system based on the incorporation of a thermal management matrix including a supply of phase change material disposed at least in part in a heat conductive lattice member to effectively dissipate heat produced or generated by or in the battery system such as to minimize or prevent thermal runaway propagation in the electrochemical cells of the system.

It is thus an object of the present invention to overcome or reduce at least some of the drawbacks of the prior art and to provide an improved thermal runaway handling, in particular to provide a battery system with an improved cooling circuit.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system, including: a plurality of battery cells arranged to form one or more battery packs, a cooling circuit comprising cooling channels for cooling the battery cells via cooling fluid flowing along the cooling channels in a flow direction, wherein the cooling channels include cooling channel segments, each of the cooling channel segments extending alongside and being thermally conductively connected to one of the battery cells, the cooling channel segments each comprising an upstream end where the cooling fluid enters into the cooling channel segment and a downstream end where the cooling fluid leaves the cooling channel segment, wherein the cooling channel segments are lined, at an inner wall thereof, with a phase-change material, PCM, which is adapted to melt and detach from the inner wall when the battery cell to which the cooling channel segment is thermally conductively connected to overheats, the PCM being further adapted to be carried along the flow direction by the cooling fluid and to solidify and accumulate at the downstream end of the cooling channel segment thereby blocking the cooling fluid from leaving the cooling channel segment.

According to an aspect of the present disclosure, the cooling channel segments each includes a constriction at their downstream end for facilitating the blocking of the cooling fluid from leaving the cooling channel segment.

According to an aspect of the present disclosure, the inner wall of the cooling channel segments lined with the PCM is the inner wall closest to the battery cell the cooling channel segment extends along and is thermally conductively connected to.

According to an aspect of the present disclosure, the PCM has a melting point between about 70 °C and 105 °C, preferably about between 80 °C and 105 °C, more preferably the PCM has a melting point of about 80°C.

According to an aspect of the present disclosure, the PCM is a coating.

According to an aspect of the present disclosure, the PCM is an alloy.

According to an aspect of the present disclosure, the alloy is one of bismuth-indium, Biln; bismuth indium tin, BilnSn; aluminum-silicon, AlSi; aluminum-magnesium, AlMg; gallium-aluminum-arsenide, GaAlAs.

Yet another aspect of the present disclosure refers to an electric vehicle including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic bottom view of a battery system according to an embodiment.
- Fig. 2a and 2b: illustrate a schematic cross section of one of the battery cells and corresponding cooling channel segment of the battery system of Fig. 1.
- Fig. 3a and 3b: illustrate the schematic cross section of Fig. 2 with the PCM blocking the cooling channel segment.
- Fig. 4: illustrates a schematic bottom view of the battery system of Fig. 1 with the cooling flow being rerouted due to the PCM blocking the cooling channel segment of one of the battery cells.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells. The battery system may include a housing accommodating the battery cells. The battery cells within each battery pack may be interconnected via electrical connectors, e.g. busbars, contacting respective electrode/cell terminals of the battery cells. The battery cells are arranged to form one or more battery packs, wherein in a battery pack the battery cells are electrically interconnected e.g. in a series and/or in parallel as explained above. Multiple of the battery cell within a battery pack may form a battery module. Two or more of the battery modules may be stacked to form cell stacks. The battery cells may e.g. be prismatic or cylindrical cells. Each of the battery cells includes a top side at an upper end of the battery cell and a bottom side at a lower end of the battery cell. The battery cells may each include a venting exit at a venting side of the battery cell, which is the terminal side of the battery cells, the venting exits allowing a venting gas stream to escape the battery cells during a thermal runaway. Venting valves may be provided at the venting exits. The venting side may be the top side and/or the bottom side of the battery cells, i.e. venting exits may be provided at the top side and/or the bottom side of the battery cells.

The battery system further includes a cooling circuit for cooling the battery cells during regular operation. The cooling circuit includes cooling channels for carrying a cooling fluid along a flow direction. The cooling circuit may include a supply line for supplying the cooling fluid to the cooling channels and a return line along which the cooling fluid may leave the cooling channels. The cooling fluid may be actively pumped through the cooling circuit, e.g. via an electric pump. The cooling channels include cooling channel segments that each extend along at least one side of one of the battery cells, for example of exactly one of the battery cells. In other words, the section of a cooling channel that extends alongside a battery cell may be understood as the cooling channel segment of the battery cell. The cooling channel segments extend along the bottom sides of the respective battery cell. That is, the battery cells/packs are arranged on the cooling channels. For every battery cell (exactly) one cooling channel segment may be provided. The cooling channel segments are each thermally conductively connected to the battery cells along which they extend. In other words, the cooling channel segments are arranged and adapted to receive heat from their respective battery cell via conductive heat transfer, e.g. via a cell housing of the battery cell. The cooling channel segments each include an upstream end for entering of the cooling fluid into the cooling channel segment and a downstream end for discharging or leaving of the cooling from the cooling channel segment.

According to an embodiment, at least one of the cooling channel segments is lined with a phase-change material, PCM. For example, all of the cooling channel segments are lined with a PCM. The cooling channel segment being lined with the PCM means that the PCM is arranged or disposed at least at one inner wall of the cooling channel segment. For example, an inner wall closest to that battery cell the cooling channel segment extends along is lined with the PCM. An inner wall means an inside wall of the cooling channel segment that delimits the cooling channel segment to the inside, in other words an inner wall that is in contact with the cooling fluid. Further, for example, the cooling channel segment is completely lined with the PCM, i.e. all of the inner walls are lined with the PCM. The PCM is adapted to melt and detach from the inner wall when the respective battery cell, to which the cooling channel segment is thermally conductively connected to, overheats. That means that the PCM has a melting point that is exceeded when the respective battery cell overheats. Overheating means that the respective battery cell reaches a temperature that is higher than the regular operational temperature of the battery cell, that the respective battery cell reaches a temperature that occurs (only) during a thermal runaway. The material of the PCM is chosen such that the PCM melts when the affected battery cell overheats, i.e. experiences a thermal runaway. That is, the material of the PCM and therefore the melting point of the PCM may be chosen depending on the cell chemistry because different cell chemistry may reach different temperatures during a thermal runaway. Also, the cell architecture may be considered when choosing the material of the PCM and thus the melting point. For example, depending on the cell architecture and the cell chemistry, during a thermal runaway an outer surface of the affected battery cell may reach temperatures of about 250°C. The adjacent cooling channel segment is heated up by this outer surface of the battery cell and the PCM by the cooling channel segment. The PCM may then be chosen to have a melting point of e.g. about 80°C as this temperature should be exceeded during thermal runaway. The detached PCM is further adapted to be carried along the flow direction, by the cooling fluid, through the cooling channel segment and to solidify and accumulate at the downstream end of the cooling channel segment thereby blocking the cooling fluid from leaving the cooling channel segment. This stops heat propagation via the cooling fluid as explained in more detail below.

If a battery cell of the inventive battery system experiences a thermal runaway, it heats up excessively and thus overheats. A battery cell experiencing a thermal runaway is also referred to as an affected battery cell. As mentioned previously, the temperature inside the affected battery cell may reach up to 1000°C depending on the cell chemistry. Therefore, a large amount of heat energy is transferred conductively from the affected battery cell, e.g. via a cell housing, to the cooling channel segment. As a result, the cooling channel segment and thus the PCM at the inner wall of the cooling channel segment are heated up. In such a case, the PCM according to the invention reaches temperatures that are higher than its melting point so that the PCM melts and, consequently, detaches from the inner wall of the cooling channel segment. The cooling liquid flowing along the cooling channel segment the PCM has detached from carries the detached PCM with it along the flow direction and thereby cools down the detached PCM so that it again transitions in phase, i.e. it solidifies. In other words, the liquified and detached PCM is cooled down below its melting point due to heat transfer to the cooling fluid and the increased distance from the affected battery cell. The material of the PCM and thus its melting point is chosen such that this re-solidifying happens within the cooling channel segment. The solidified PCM then accumulates at the downstream end of the cooling channel segment thereby blocking the exit of the cooling channel segment, i.e. blocking the cooling fluid from leaving the cooling channel segment. That is, the re-solidified PCM may form a single block or rather a variety of smaller lumps/chunks that clog the cooling channel segment and thus the respective cooling channel. Therefore, the affected battery cell has limited access to the cooling fluid as the respective cooling channel segment presents a dead end. Due to this blocking, the cooling fluid is rerouted thereby bypassing the affected battery cell and thus the heat source. As a result, the cooling fluid is not heated up as much by the affected battery cell and does not compose a risk for the further battery cells. For example, battery cells arranged subsequently in the flow direction, i.e. downstream of the affected battery cell, will not get heated up by the cooling fluid. Thereby convective heat propagation from the affected battery cells via the cooling fluid is prevented or at least reduced. In this manner an improved thermal runaway handling is achieved.

According to an embodiment, the cooling channel segments each include a constriction at their downstream end for facilitating the blocking of the cooling fluid from leaving the cooling channel segment. The constriction means a reduction in cross-sectional area of the cooling channel segment. For example, an inner wall of the cooling channel segment may include a protruding element protruding from the inner wall into the cooling channel segment. For example, at least two opposite inner walls of the cooling channel segment include such protruding elements. Such a constriction facilitates the accumulation of the re-solidified PCM. In other words, such a constriction forms an obstruction within the cooling channel segment at which the detached and re-solidified PCM may accumulate at. This ensures that the cooling channel segment of the affected battery cell is blocked promptly after the affected battery cell going into thermal runaway.

According to an embodiment, the inner wall of the cooling channel segments lined with the PCM is the inner wall closest to the battery cell the cooling channel segment extends along and is thermally conductively connected to, as mentioned above. This inner wall will heat up first after the affected battery cell enters the thermal runaway as it is closest to the affected battery cell. Thus, providing the PCM at least at this inner wall may ensure a timely heating up of the PCM and thus blocking of the cooling channel segment as explained above.

According to an embodiment, the PCM has a melting point, i.e. melting temperature, between (about) 70 °C and (about) 105 °C, preferably between (about) 80 °C and (about) 105 °C, more preferably the PCM has a melting point of (about) 80°C. As mentioned above, the melting point may vary inter alia depending on the cell chemistry. Also, the cell architecture may be considered when choosing the material of the PCM and thus the melting point. For example, depending on the cell architecture and the cell chemistry, during a thermal runaway an outer surface of the affected battery cell may reach temperatures of about 250°C. The adjacent cooling channel segment is heated up by this outer surface of the battery cell and the PCM by the cooling channel segment. The PCM may then be chosen to have a melting point of e.g. about 80°C as this temperature should be exceeded during thermal runaway. The melting point of the PCM should be low enough to melt during the temperatures the cooling channel segment experiences during a thermal runaway of its respective battery cell but high enough to prevent melting of the PCM during regular operation. For example, a regular operational temperature of the cooling fluid may be about 45°C, at most about 55°C in warmer climates. Considering these factors, the inventor has found that the above-mentioned temperature ranges, in particular the temperature of about 80°C for the melting point are well-suited for ensuring that the PCM melts at the temperatures the cooling channel segment experiences during a thermal runaway of the battery cell the cooling channel segment extends along and is thermally coupled to, but high enough to prevent melting of the PCM during regular operation.

According to an embodiment, the PCM is a coating. That is, the PCM may be coated to the inner wall(s) of the cooling channel segments. The PCM may be prepared as a solution and applied to the inner wall(s). This allows for a particularly efficient provision of the PCM.

According to an embodiment, the PCM is an alloy. According to a respective embodiment, the alloy is one of bismuth-indium, Biln; bismuth indium tin, BilnSn; aluminum-silicon, AlSi; aluminum-magnesium, AlMg; gallium-aluminum-arsenide, GaAlAs. These alloys may be suited as PCM for the intended purpose as they may have melting points in the above-mentioned suitable ranges, in particular a melting point of about 80°C.

The invention also pertains to an electric vehicle including a battery system according to the invention.

### Specific Embodiments

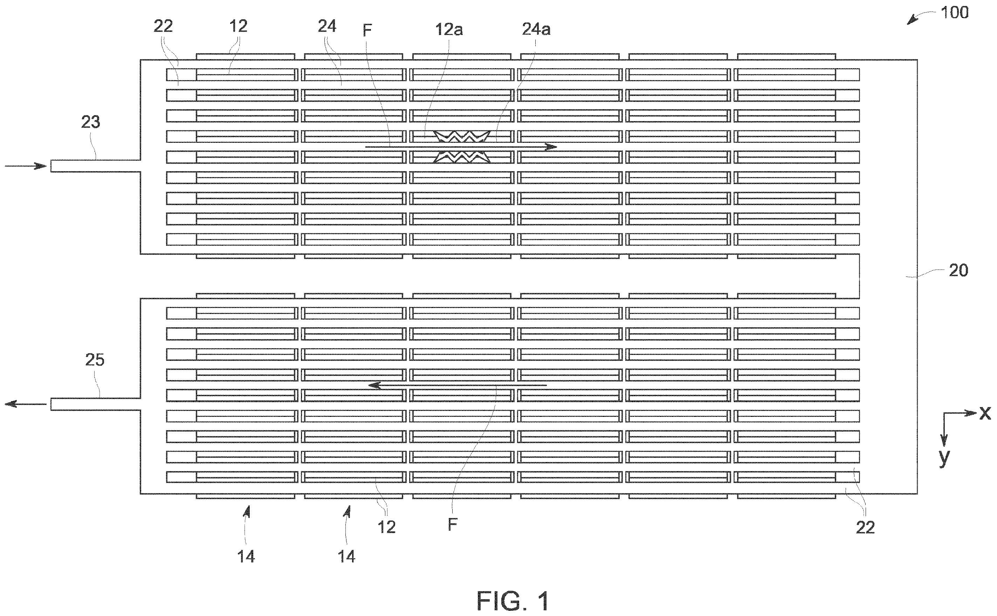

Fig. 1 is a bottom view illustrating schematically a battery system 100 according to an embodiment of the invention. The battery system 100 includes a plurality of battery cells 12, the battery cells 12, by electrical interconnection, being arranged to form multiple battery packs 14. The battery system 100 further includes a cooling circuit 20 for cooling the battery cells 12 via cooling channels 22 which extend along a bottom side of the battery cells 12. Cooling fluid enters the cooling circuit 20 via a supply line 23, flows through the cooling channels 22 along a flow direction F and leaves the cooling circuit 20 via a return line 25. For better readability, only some of the battery cells 12 and cooling channels 22 are provided with reference signs.

The cooling channels 22 includes cooling channel segments 24, wherein each of the cooling channel segments 24 extends alongside the bottom of one of the battery cells 12 and is thermally conductively connected to the one battery cell 12. In other words, the section of a cooling channel 22 which extends along the battery cells 12 at their bottom side can be understood as a cooling channel segment 24 adapted to cool the battery cell 12. Heat may be transferred from the battery cell 12, e.g. in case of a thermal runaway of the battery cell, via a cell housing of the battery cell 12 to the corresponding cooling channel segment 24.

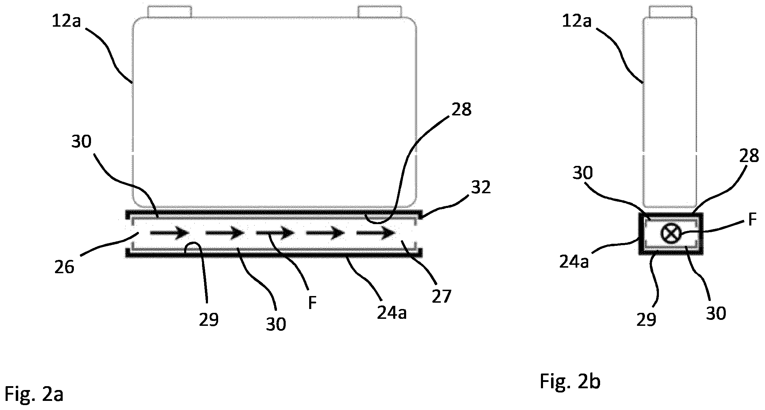

Fig. 2a and 2b show different cross sections of a battery cell 12a, which is one of the plurality of battery cells 12. While Fig. 2a shows a cross section along a length of the battery cell 12a (i.e. along the x-axis as shown in Fig. 1), Fig. 2b shows a cross section along a width of the battery cell 12a (i.e. along the y-axis as shown in Fig. 1).

As can be seen in Fig. 2a and 2b, a cooling channel segment 24a, which is one of the cooling channel segments 24, extends alongside the bottom side of the battery cell 12a. The cooling channel segment 24a includes an upstream end 26 and a downstream end 27. The cooling fluid enters the cooling channel segment 24a at the upstream end 26, flows through the cooling channel segment 24a along the flow direction F and leaves the cooling channel segment 24a at the downstream end 27. The cooling channel segment 24a includes a constriction 32 at its downstream end 27 as shown in Fig. 2a, i.e. the cooling channel segment 24a has a reduced cross-sectional area at the constriction 32.

The cooling channel segment 24a is lined with a phase-change material, PCM, 30 as shown schematically. The PCM 30 may be applied to inner walls 28, 29 of the cooling channel segment 24a as a coating. As shown in Fig. 2, the inner wall 28, which is closest to the battery cell 12a that the cooling channel segment 24a is thermally conductively connected to, is provided with the PCM 30. Also, in this embodiment, the opposite inner wall 29 is provided with the PCM 30. The whole inner surface of the cooling channel segment 24a, i.e. all of the inner walls of the cooling channel segment 24a, may be provided with the PCM 30. Thus, the cooling channel segment 24a may be completely lined with the PCM 30. The PCM 30 may have a melting point of e.g. 80°C.

During regular operation, the temperature of the cooling fluid is at about 45°C, at the most at 60°C in warm climates. During such regular operation, the PCM 30 is in solid form and attached to the inner walls 28, 29 of the cooling channel segment 24a allowing for the cooling fluid to flow through the channel segment 24a as mentioned above. This is shown in Fig. 2a and 2b.

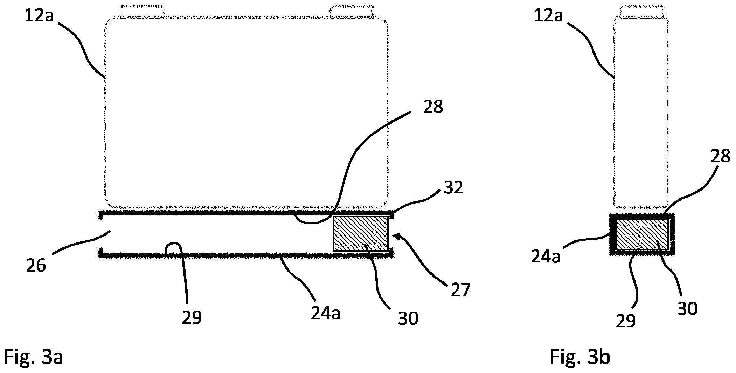

In case of a thermal runaway occurring inside the battery cell 12a, the affected battery cell 12a heats up excessively and thereby transfers heat conductively to the cooling channel segment 24a. For example, during such a thermal runaway, the battery cell 12a may reach a surface temperature of about 250°C. This leads to a heating up of the adjacent cooling channel segment 24a, that is, the inner walls 28, 29 which are coated with the PCM 30. Thereby, the melting point (e.g., 80°C) of the PCM 30 is exceeded although the PCM 30 is cooled by the flowing cooling liquid. This leads to the melting of the PCM 30 so that the PCM 30 detaches from the inner walls 28, 29 of the cooling channel segment 24a and is carried away by the flow of cooling liquid along the flow direction F towards the downstream end 27 of the cooling channel segment 24a. During this process, the detached PCM 30 is cooled down such that it solidifies again (due to heat transfer to the cooling fluid and the increased distance from the affected battery cell 12a). The solidified PCM 30 then accumulates at the downstream end 27 of the cooling channel segment 24a at the constriction 32, thereby blocking the cooling fluid from leaving the cooling channel segment 24a as shown in Fig. 3a and 3b.

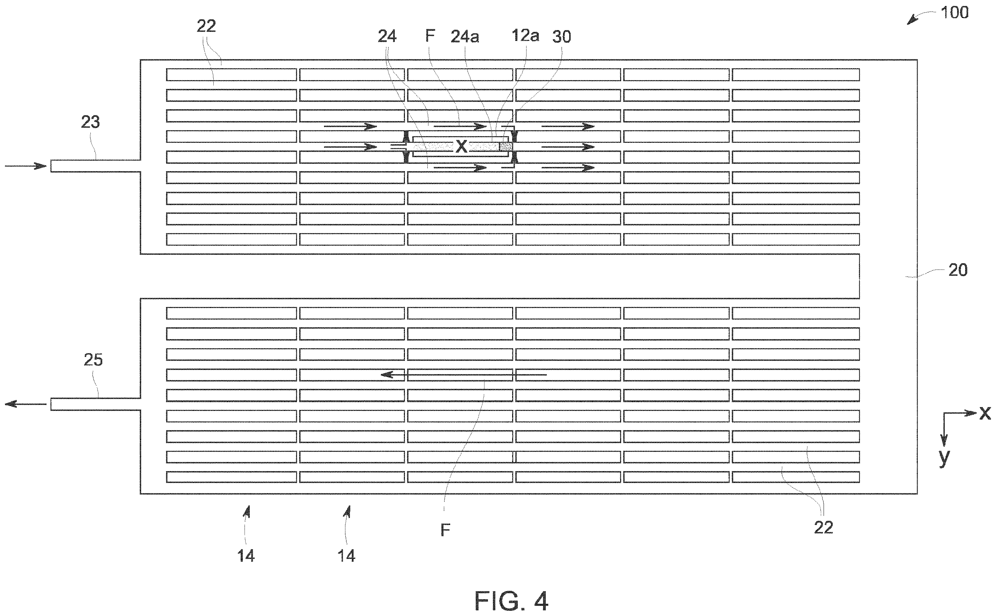

As a result of this blocking of the cooling fluid through the cooling channel segment 24a of the affected battery cell 12a, the flow of cooling fluid through the cooling circuit 20 is redirected or rerouted through the adjacent cooling channel segments 24 as indicated by the arrows in Fig. 4. Thus, the flow of cooling liquid circumvents the affected battery cell 12a. This avoids excessive heating up of the cooling liquid and thus prevents that downstream battery cells 12 are heated up by the cooling liquid. Therefore, convective heat propagation via the cooling liquid to further battery cells 12 is prevented and the thermal runaway event may be contained. In Fig. 4, the battery cells 12 are not shown for better readability.

In some embodiment, the PCM and the constriction described the above are provided to each cooling channel segment 24 of every battery cell 12, i.e., to all of the cooling channel segments 24.

### Reference signs

- 12: battery cells
- 12a: affected battery cell
- 14: battery packs
- 20: cooling circuit
- 22: cooling channels
- 23: supply line
- 24: cooling channel segments
- 24a: cooling channel segment of affected battery cell
- 25: return line
- 26: upstream end
- 27: downstream end
- 28: inner wall closest to affected battery cell
- 29: opposite inner wall
- 30: PCM
- 32: constriction
- 100: battery system
- F: Flow direction

## Claims

1. A battery system (100), comprising:
a plurality of battery cells (12) arranged to form one or more battery packs (14),
a cooling circuit (20) comprising cooling channels (22) for cooling the battery cells (12) via cooling fluid flowing along the cooling channels (22) in a flow direction (F),
wherein the cooling channels (22) comprise cooling channel segments (24), each of the cooling channel segments (24) extending alongside and being thermally conductively connected to one of the battery cells (12), the cooling channel segments (24) each comprising an upstream end (26) where the cooling fluid enters into the cooling channel segment (24) and a downstream end (27) where the cooling fluid leaves the cooling channel segment (24),
**characterized in that** the cooling channel segments (24) are lined, at an inner wall (28, 29) thereof, with a phase-change material, PCM, (30) which is adapted to melt and detach from the inner wall (28, 29) when the battery cell (12) to which the cooling channel segment (24) is thermally conductively connected to overheats, the PCM (30) being further adapted to be carried along the flow direction (F) by the cooling fluid and to solidify and accumulate at the downstream end (27) of the cooling channel segment (24) thereby blocking the cooling fluid from leaving the cooling channel segment (24).

2. The battery system (100) according to claim 1, wherein the cooling channel segments (24) each comprise a constriction (32) at their downstream end (27) for facilitating the blocking of the cooling fluid from leaving the cooling channel segment (24).

3. The battery system (100) according to claim 1 or 2, wherein the inner wall (28) of the cooling channel segments (24) lined with the PCM (30) is the inner wall (28) closest to the battery cell (12) the cooling channel segment (24) extends along and is thermally conductively connected to.

4. The battery system (100) according to any one of the preceding claims, wherein the PCM (30) has a melting point between about 70 °C and 105 °C, preferably about between 80 °C and 105 °C, wherein more preferably the PCM (30) has a melting point of about 80°C.

5. The battery system (100) according to any one of the preceding claims, wherein the PCM (30) is a coating.

6. The battery system (100) according to any one of the preceding claims, wherein the PCM (30) is an alloy.

7. The battery system (100) according to claim 6, wherein the alloy is one of bismuth-indium, Biln; bismuth indium tin, BilnSn; aluminum-silicon, AlSi; aluminum-magnesium, AlMg; gallium-aluminum-arsenide, GaAlAs.

8. An electric vehicle comprising the battery system (100) according to any one of the preceding claims.

## Patentansprüche

1. Batteriesystem (100), umfassend:
mehrere Batteriezellen (12), die so angeordnet sind, dass sie einen oder mehrere Batteriepacks (14) bilden,
einen Kühlkreislauf (20) mit Kühlkanälen (22) zum Kühlen der Batteriezellen (12) mittels eines Kühlfluids, das in einer Strömungsrichtung (F) entlang der Kühlkanäle (22) strömt,
wobei die Kühlkanäle (22) Kühlkanalsegmente (24) umfassen, wobei sich jedes der Kühlkanalsegmente (24) entlang einer der Batteriezellen (12) erstreckt und thermisch leitend mit dieser verbunden ist, wobei die Kühlkanalsegmente (24) jeweils ein stromaufwärtiges Ende (26), an dem das Kühlfluid in das Kühlkanalsegment (24) eintritt, und ein stromabwärtiges Ende (27), an dem das Kühlfluid das Kühlkanalsegment (24) verlässt, umfassen,
**dadurch gekennzeichnet, dass** die Kühlkanalsegmente (24) an ihrer Innenwand (28, 29) mit einem Phasenwechselmaterial (kurz: PCM) (30) ausgekleidet sind, das so ausgelegt ist, dass es schmilzt und sich von der Innenwand (28, 29) löst, wenn die Batteriezelle (12), mit der das Kühlkanalsegment (24) thermisch leitend verbunden ist, überhitzt, wobei das PCM (30) ferner so ausgelegt ist, dass es vom Kühlfluid in Strömungsrichtung (F) mitgeführt wird und sich am stromabwärtigen Ende (27) des Kühlkanalsegments (24) verfestigt und ansammelt, wodurch das Kühlfluid daran gehindert wird, das Kühlkanalsegment (24) zu verlassen.

2. Batteriesystem (100) nach Anspruch 1, wobei die Kühlkanalsegmente (24) jeweils eine Verengung (32) an ihrem stromabwärtigen Ende (27) umfassen, um das Verhindern des Kühlfluids, das Kühlkanalsegment (24) zu verlassen, zu ermöglichen.

3. Batteriesystem (100) nach Anspruch 1 oder 2, wobei die mit dem PCM (30) ausgekleidete Innenwand (28) der Kühlkanalsegmente (24) die Innenwand (28) ist, die der Batteriezelle (12) am nächsten liegt, entlang der sich das Kühlkanalsegment (24) erstreckt und mit der es thermisch leitend verbunden ist.

4. Batteriesystem (100) nach einem der vorstehenden Ansprüche, wobei das PCM (30) einen Schmelzpunkt zwischen etwa 70°C und 105°C, vorzugsweise etwa zwischen 80°C und 105°C, aufweist, wobei das PCM (30) noch bevorzugter einen Schmelzpunkt von etwa 80°C aufweist.

5. Batteriesystem (100) nach einem der vorstehenden Ansprüche, wobei das PCM (30) eine Beschichtung ist.

6. Batteriesystem (100) nach einem der vorstehenden Ansprüche, wobei das PCM (30) eine Legierung ist.

7. Batteriesystem (100) nach Anspruch 6,
wobei die Legierung eines von Folgendem ist: Bismut-Indium, BiIn; Bismut-Indium-Zinn, BilnSn; Aluminium-Silizium, AlSi, Aluminium-Magnesium, AlMg; Gallium-Aluminium-Arsenid, GaAlAs.

8. Elektrofahrzeug, umfassend das Batteriesystem (100) nach einem der vorstehenden Ansprüche.

## Revendications

1. Système de batterie (100), comportant :
une pluralité de cellules de batterie (12) agencées pour former un ou plusieurs blocs-batteries (14),
un circuit de refroidissement (20) comportant des canaux de refroidissement (22) pour refroidir les cellules de batterie (12) par le biais d'un fluide de refroidissement circulant le long des canaux de refroidissement (22) dans une direction d'écoulement (F),
dans lequel les canaux de refroidissement (22) comportent des segments de canal de refroidissement (24), chacun des segments de canal de refroidissement (24) s'étendant le long de et étant reliés de manière thermoconductrice à l'une des cellules de batterie (12), les segments de canal de refroidissement (24) comportant chacun une extrémité amont (26) où le fluide de refroidissement entre dans le segment de canal de refroidissement (24) et une extrémité aval (27) où le fluide de refroidissement quitte le segment de canal de refroidissement (24),
**caractérisé en ce que** les segments de canal de refroidissement (24) sont revêtus, au niveau d'une paroi intérieure (28, 29) de ceux-ci, d'un matériau à changement de phase, PCM, (30) qui est adapté pour fondre et se détacher de la paroi intérieure (28, 29) lorsque la cellule de batterie (12) à laquelle le segment de canal de refroidissement (24) est connecté de manière thermoconductrice surchauffe, le PCM (30) étant en outre adapté pour être porté le long de la direction d'écoulement (F) par le fluide de refroidissement et pour se solidifier et s'accumuler à l'extrémité aval (27) du segment de canal de refroidissement (24) empêchant ainsi le fluide de refroidissement de sortir du segment de canal de refroidissement (24).

2. Système de batterie (100) selon la revendication 1, dans lequel les segments de canal de refroidissement (24) comportent chacun un rétrécissement (32) à leur extrémité aval (27) pour faciliter le fait d'empêcher le fluide de refroidissement de sortir du segment de canal de refroidissement (24).

3. Système de batterie (100) selon la revendication 1 ou 2, dans lequel la paroi intérieure (28) des segments de canal de refroidissement (24) revêtus du PCM (30) est la paroi intérieure (28) la plus proche de la cellule de batterie (12) le long de laquelle le segment de canal de refroidissement (24) s'étend et à laquelle il est connecté de manière thermoconductrice.

4. Système de batterie (100) selon l'une quelconque des revendications précédentes, dans lequel le PCM (30) a un point de fusion compris entre environ 70 °C et 105 °C, de préférence entre environ 80 °C et 105 °C, dans lequel plus préférentiellement le PCM (30) a un point de fusion d'environ 80 °C.

5. Système de batterie (100) selon l'une quelconque des revendications précédentes, dans lequel le PCM (30) est un revêtement.

6. Système de batterie (100) selon l'une quelconque des revendications précédentes, dans lequel le PCM (30) est un alliage.

7. Système de batterie (100) selon la revendication 6, dans lequel l'alliage est l'un parmi le bismuth-indium, Biln ; l'étain de bismuth-indium, BilnSn ; l'aluminium-silicium, AlSi ; l'aluminium-magnésium, AlMg ; le gallium-aluminium-arséniure, GaAlAs.

8. Véhicule électrique comportant le système de batterie (100) selon l'une quelconque des revendications précédentes.
